(19) Europäisches Patentamt

European Patent Office

Office européen des brevets

(11) **EP 0 649 804 B1**

# (12) FASCICULE DE BREVET EUROPEEN

(45) Date de publication et mention de la délivrance du brevet:
**13.03.1996 Bulletin 1996/11**

(51) Int. Cl.$^6$: **B65G 51/03**, E01B 25/26

(21) Numéro de dépôt: **94490050.5**

(22) Date de dépôt: **21.10.1994**

(54) **Dispositif d'aiguillage à plateau tournant pour installation de transfert pneumatique de récipients**

Drehtischweiche für eine pneumatische Fördervorrichtung von Behältern

A rotary platform switch device for a pneumatic container transfer installation

(84) Etats contractants désignés:
**AT BE CH DE DK ES FR GB GR IE IT LI LU NL PT SE**

(30) Priorité: **22.10.1993 EP 93490020**

(43) Date de publication de la demande:
**26.04.1995 Bulletin 1995/17**

(73) Titulaire: **NEU TRANS SYSTEM (S.A.)**
**F-59702 Marcq-en-Baroeul Cédex (FR)**

(72) Inventeurs:
- **Laquay, Fabien**
  **F-59650 Villeneuve D'Ascq (FR)**
- **Jafflin, Philippe**
  **F-59800 Lille (FR)**

(74) Mandataire: **Hennion, Jean-Claude et al**
**Cabinet Beau de Loménie,**
**37, rue du Vieux Faubourg**
**F-59800 Lille (FR)**

(56) Documents cités:
**FR-A- 1 412 996**      **US-A- 3 905 301**
**US-A- 5 246 097**

**Description**

La présente invention concerne une installation de transfert pneumatique pour récipients comportant une protubérance au niveau de leur col, notamment des bouteilles ou des récipients en matière plastique. Elle concerne plus particulièrement un dispositif d'aiguillage à plateau tournant pour une installation comprenant au moins deux lignes de transfert parallèles.

On connaît par exemple par les documents EP 0 070 931 ou US 4 284 370 des installations de transfert de bouteilles en matière plastique, notamment en polyéthylène ou en polychlorure de vinyle, lesdites bouteilles comportant à proximité de leur col une protubérance. Chaque ligne de transfert est délimitée par deux supports latéraux sur lesquels reposent les bouteilles par leur protubérance. De plus elle est équipée de moyens de transfert par jet d'air assurant le déplacement des bouteilles sur les supports latéraux. Il s'agit par exemple d'un caisson allongé qui est disposé au-dessus des supports latéraux, qui est muni de fentes, projetant l'air au-dessus des supports latéraux en sorte que cet écoulement d'air agisse sur la partie supérieure des bouteilles et provoque leur déplacement.

De telles installations permettent de réaliser le déplacement et aussi le stockage par accumulation dynamique des bouteilles en ligne.

A l'occasion du remplissage des bouteilles en question, on a souvent recours à plusieurs machines disposées en amont et en aval de l'installation de transfert. Il s'agit par exemple de machines de soufflage réalisant la fabrication proprement dite des bouteilles, de machines de palettisation ou de dépalettisation, de machines de soutirage...

On comprend qu'entre ces différentes machines l'installation de transfert est amenée à assurer l'accumulation dynamique des bouteilles mais également des fonctions de collecte et de distribution. On parle de fonction de collecte lorsqu'il s'agit de réunir sur une même ligne de transfert des bouteilles provenant de deux lignes. On parle de fonction de distribution lorsqu'il s'agit de ventiler sur deux lignes de transfert des bouteilles provenant d'une seule ligne. Ces fonctions de collecte et de distribution nécessitent la mise en oeuvre d'un moyen d'aiguillage qui est placé au niveau des lignes de transfert correspondantes.

Les moyens d'aiguillage actuels, selon le demandeur, sont des dispositifs en Y dont un type est connu par le document US 5 246 097. Dans sa fonction de collecte, les deux lignes de transfert amont débouchent sur les deux branches supérieures du Y tandis que la ligne de transfert unique en aval est constituée par la branche inférieure du Y. Ce dispositif est équipé de moyens de blocage permettant d'arrêter le déplacement des bouteilles selon l'une des lignes amont de transfert à proximité de l'embranchement du Y, tandis que l'autre ligne amont de transfert alimente la ligne de transfert aval en bouteilles. Lorsque toutes les bouteilles accumulées dans la première ligne amont ont été évacuées dans la ligne aval, le système d'arrêt est débloqué sur la seconde ligne amont en sorte d'alimenter la ligne aval avec les bouteilles accumulées dans cette seconde ligne amont. Le même type de dispositif d'aiguillage peut réaliser la fonction de distribution à partir d'une ligne unique amont de transfert qui alimente deux lignes aval de transfert.

Dans tous les cas un système d'arrêt bloque les bouteilles avant la manoeuvre du dispositif d'aiguillage. Lorsque le dispositif d'aiguillage est positionné de manière adéquate le système d'arrêt s'efface et libère les bouteilles.

Les dispositifs d'aiguillage connus en Y permettent de répondre de façon satisfaisante au problème d'implantation usuel pour des installations d'embouteillage comprenant 3 ou 4 machines à relier les unes aux autres, par exemple s'agissant de deux machines de soufflage et d'une machine de soutirage.

Cependant les lignes actuelles d'embouteillage sont de conception de plus en plus complexe, mettant en oeuvre des machines de nature très différente, telles que des machines de palettisation ou de dépalettisation ou encore des systèmes à silo redresseurs. De ce fait il est maintenant nécessaire de disposer de possibilité d'aiguillage plus nombreuses permettant une relation optimisée d'un maximum de machines. Pour réaliser de telles liaisons, la solution actuelle réside dans la mise en place en série de plusieurs dispositif d'aiguillage en Y. Par exemple pour relier entre elles quatre machines, on doit disposer quatre dispositifs d'aiguillage en Y si l'on veut laisser la possibilité de relier sans automatisme les machines deux à deux et si l'on veut ne pas concentrer, en cas de marche automatique, tout le flux de bouteilles en un seul point.

Le but visé par le demandeur est de proposer un dispositif d'aiguillage pour une installation de transfert permettant de relier plusieurs machines deux à deux, ladite installation comportant des lignes parallèles de transfert pneumatique. On sait en effet que dans la conception des nouvelles installations de transfert pneumatique de récipients, la notion d'encombrement est capitale compte-tenu de la complexité de telles installations et que les lignes de transfert pneumatique sont généralement disposées parallèlement les unes aux autres, dans l'espace le plus réduit possible. Le dispositif d'aiguillage selon l'invention est destiné à une installation ayant au moins deux lignes d'entrée et une ligne de sortie ; parallèles entre elles, pour le transfert pneumatique de récipients qui comportent une protubérance au niveau du col ; de manière connue chaque ligne de transfert est délimitée par deux supports latéraux aptes à supporter les récipients par leur protubérance et est équipée de moyens de transfert par jet d'air.

De manière caractéristique le dispositif d'aiguillage comprend un tablier fixe et un plateau circulaire tournant. Le tablier fixe comprend une pluralité de tronçons de lignes de transfert, à savoir un tronçon amont par ligne d'entrée et un tronçon aval par ligne de sortie, chacun des tronçons étant raccordé au plateau tournant selon une direction radiale, et présentant donc, s'il n'a pas lui-même cette direction radiale, une extrémité recourbée radialement par rapport au plateau tournant. Le plateau circulaire tournant comprend trois tronçons de transfert d'aiguillage, à savoir un tronçon diamétral et un tronçon extérieur disposé de part et d'autre du tronçon diamétral, symétriquement à celui-ci, chaque tronçon extérieur étant raccordé au tablier fixe selon une extrémité recourbée radialement par rapport au plateau tournant. Enfin le plateau tournant est équipé de moyens de pivotement aptes à lui faire adopter des positions prédéterminées, dans lesquelles sont mis en concordance tout ou partie des tronçons amont et aval du tablier fixe grâce à tout ou partie des tronçons d'aiguillage du plateau tournant.

Etant donné qu'il s'agit de déplacer par jet d'air des récipients sur chaque ligne de transfert, il importe que le rayon de courbure de chaque extrémité recourbée des tronçons correspondants soit le plus grand possible, de manière à permettre un déplacement dans les zones recourbées qui soit sans ralentissement préjudiciable pour la cadence de production.

De préférence s'agissant du transfert pneumatique de récipients ayant un diamètre maximal compris entre 50 et 130 mm, le rayon de courbure R1 de l'extrémité recourbée de chacun des tronçons amont et aval du tablier fixe est de l'ordre 750 mm.

Lorsque le plateau tournant est dans une position où, les deux lignes d'entrée sont alimentées l'une et l'autre de sorte que les récipients se déplacent en même temps sur les deux tronçons extérieurs d'aiguillage du plateau tournant, il importe que la distance séparant ces deux tronçons extérieurs d'aiguillage permette un tel déplacement mais également puisse autoriser la mise en place de guides latéraux pour les récipients.

Ainsi de préférence le rayon de courbure R2 des extrémités recourbées des deux tronçons extérieurs d'aiguillage du plateau tournant est choisi comme étant inférieur au rayon de courbure R1 des extrémités recourbées des tronçons amont et aval du tablier fixe. Ceci permet d'obtenir l'écartement le plus important entre les deux tronçons extérieurs d'aiguillage.

Avantageusement pour un rayon de courbure R1 de l'ordre de 750 mm, le rayon de courbure R2 est de l'ordre de 500 mm.

Un problème d'encombrement du même ordre est à prendre en compte en ce qui concerne le diamètre du plateau circulaire tournant. En effet, il arrive fréquemment que les lignes de transfert parallèles fassent parties d'une installation plus complexe, comportant un nombre important de lignes parallèles. Dans ce cas il est nécessaire que le dispositif d'aiguillage selon l'invention puisse s'intégrer dans l'installation sans perturber le bon fonctionnement des autres lignes de transfert.

Ainsi et de préférence le plateau tournant a un diamètre qui est inférieur à 1 250 mm.

Ces contraintes d'encombrement liées au diamètre du plateau tournant, à l'écartement entre les lignes de transfert pénétrant dans le dispositif d'aiguillage et à l'écartement entre les deux tronçons extérieurs d'aiguillage déterminent la géométrie des extrémités recourbées des tronçons ainsi que le fait que chaque tronçon extérieur d'aiguillage comporte entre ses deux extrémités recourbées une partie rectiligne de plus ou moins grande longueur.

En particulier, elles se traduisent par le fait que les extrémités recourbées des tronçons doivent être le plus ramassées possible, ce qui implique que pour un rayon de courbure donnée R1 ou R2 l'angle $\alpha$ de courbure desdites extrémités doit être le plus petit possible. Selon le demandeur cet angle doit être au plus de 40°. De préférence pour des récipients ayant un diamètre maximal compris entre 50 et 130 mm, il est compris entre 18 et 24°.

Dans un premier mode préféré de réalisation, il s'agit d'un dispositif d'aiguillage quatre voies destiné à une installation à deux lignes de transfert parallèles, ayant donc deux lignes d'entrée et deux lignes de sortie. De manière caractéristique, le tablier fixe comprend quatre tronçons, à savoir un premier et un second tronçon amont pour respectivement la première et la seconde ligne d'entrée, et un premier et un second tronçon aval pour respectivement la première et la seconde ligne de sortie, chacun des tronçons étant raccordé au plateau tournant par une extrémité recourbée radialement. De plus le plateau tournant peut adopter trois positions prédéterminées :

a) une première position selon laquelle le premier et le second tronçon amont sont raccordés respectivement au premier et au second tronçon aval des deux lignes de transfert du tablier fixe grâce aux deux tronçons extérieurs d'aiguillage du plateau tournant, le tronçon diamétral du plateau tournant étant inactif dans cette première position et étant parallèle et à égale distance de la direction générale des deux lignes de transfert,

b) une deuxième position selon laquelle le premier tronçon amont est raccordé au second tronçon aval grâce au tronçon diamétral d'aiguillage,

c) et une troisième position selon laquelle le second tronçon amont est raccordé au premier tronçon aval grâce au tronçon diamétral d'aiguillage.

Ainsi dans la première position, qui correspond à la liaison normale de quatre machines deux à deux par deux lignes de transfert parallèles, le dispositif d'aiguillage permet le passage normal du flux de récipients d'une machine à l'autre. Dans ce cas chaque ligne de transfert comporte au niveau du raccordement d'entrée et du raccordement de sortie, entre le tablier fixe et le plateau tournant une zone où le parcours des récipients forme une sorte de S correspondant aux deux extrémités recourbées des tronçons implantés sur le tablier fixe et le plateau tournant en concordance l'une avec l'autre.

La ligne de tangence passant par le point d'inflexion de cet S est disposée radialement par rapport au plateau tournant, passant par l'axe de rotation du plateau tournant.

Dans un exemple préféré de réalisation, permettant le transfert pneumatique de bouteilles plastiques dont le diamètre extérieur est compris entre 50 et 130 mm, s'agissant de bouteilles ayant une contenance de l'ordre de 25 cl à 2 litres, l'entr'axe entre les deux lignes de transfert parallèles étant de 500 mm, les deux rayons de courbures R1 et R2 étant respectivement de 750 et 500 mm , le diamètre du plateau tournant était de l'ordre de 1 010 mm, la longueur des tronçons extérieurs d'aiguillage était de l'ordre de 550 mm avec un entr'axe de l'ordre de 310 mm et un angle $\alpha$ de courbure de 22, 48°.

Dans un deuxième mode de réalisation, il s'agit d'un dispositif d'aiguillage six voies destiné à une installation à trois lignes de transfert parallèles, ayant donc trois lignes d'entrée et trois lignes de sortie. De manière caractéristique, par rapport au dispositif quatre voies à deux lignes parallèles, le tablier fixe comprend deux tronçons supplémentaires, à savoir un troisième tronçon amont pour la troisième ligne d'entrée et un troisième tronçon aval pour la troisième ligne de sortie, ces deux tronçons supplémentaires étant rectilignes et dans l'alignement du tronçon diamétral d'aiguillage dans la première position.

Dans un troisième mode de réalisation, il s'agit d'un dispositif d'aiguillage quatre voies destiné à une installation à trois lignes d'entrée et une ligne de sortie. Le tronçon amont de la troisième ligne d'entrée et le tronçon aval de la ligne de sortie sont rectilignes , tandis que les premier et deuxième tronçons amont des première et deuxième lignes d'entrée sont raccordés au plateau tournant par une extrémité recourbée, étant disposée de part et d'autre par rapport au troisième tronçon, le plateau tournant peut adopter trois positions :

a) une première position selon laquelle seul le troisième tronçon amont est raccordé au tronçon de sortie grâce au tronçon diamétral d'aiguillage,
b) une deuxième position selon laquelle seul le premier tronçon amont est raccordé au tronçon de sortie grâce au premier tronçon extérieur d'aiguillage,
c) et une troisième position selon laquelle seul le deuxième tronçon amont est raccordé au tronçon de sortie grâce au second tronçon extérieur d'aiguillage.

Dans ce troisième mode de réalisation, il s'agit d'une fonction de collecte de trois en un. Bien sûr disposé différemment , le même dispositif pourrait convenir pour effectuer une fonction de distribution de un en trois.

Il peut arriver, en cas de dysfonctionnement , qu'il soit nécessaire d'extraire d'une ligne de transfert au niveau du dispositif d'aiguillage un ou plusieurs récipients qui seraient restés de manière inopportune dans l'un des tronçons d'aiguillage du plateau tournant.

Avantageusement, et pour cela le tablier fixe comporte au moins une encoche à proximité et en regard du plateau tournant au niveau d'un emplacement du tronçon diamétral d'aiguillage lorsque le plateau tournant est dans la première position. De préférence le tablier fixe comporte six encoches en concordance avec les trois positions possibles adoptées par les trois tronçons d'aiguillage. Dans ces conditions il est possible d'extraire manuellement un récipient qui serait resté sur l'un des trois tronçons quelque soit la position du plateau tournant.

De préférence, pour réaliser cette extraction, les trois tronçons d'aiguillage sont équipés de détecteurs de présence de récipients, lesdits détecteurs étant aptes à interdire, en fonctionnement automatique, la rotation du plateau tournant jusqu'à extraction manuelle du récipient.

Le dispositif d'aiguillage de l'invention peut comporter également sur les tronçons amont des lignes de transfert parallèles du tablier fixe des moyens d'arrêt des récipients ainsi que des moyens de commande automatiques desdits moyens d'arrêt et des moyens de pivotement du plateau tournant ; les moyens de commande automatiques sont programmés en sorte d'obtenir automatiquement toutes les fonctions possibles de transfert/collecte/distribution des récipients sur les lignes de transfert d'entrée et de sortie.

La présente invention sera mieux comprise à la lecture de la description qui va être faite d'un premier mode préféré de réalisation d'un dispositif d'aiguillage à quatre voies intégré dans une installation de transfert pneumatique de bouteilles plastiques et de deux variantes, illustrés par le dessin annexé dans lequel :

- la figure 1 est une vue schématique en coupe des éléments entrant dans la structure d'une ligne de transfert pneumatique,
- la figure 2 est une représentation simplifiée de deux lignes de transfert parallèles avec deux dispositifs d'aiguillage en Y montés en série,
- la figure 3 est une représentation simplifiée de deux lignes de transfert pneumatique parallèles avec quatre dispositifs d'aiguillage en Y montés en série,
- les figures 4, 5 et 6 sont des vues de dessous du dispositif d'aiguillage quatre voies de l'invention respectivement, selon la première, deuxième et troisième position du plateau tournant,
- la figure 7 est une vue de dessus du dispositif d'aiguillage quatre voies montrant les moyens d'actionnement du plateau tournant,
- la figure 8 est une représentation simplifiée et partielle des paramètres entrant dans la géométrie du dispositif d'aiguillage quatre voies,
- la figure 9 représente en trois vues de dessous les trois positions d'une variante à trois lignes d'entrée et une ligne de sortie,
- et la figure 10 représente en trois vues de dessous les trois positions d'une autre variante à trois lignes d'entrée et trois lignes de sortie.

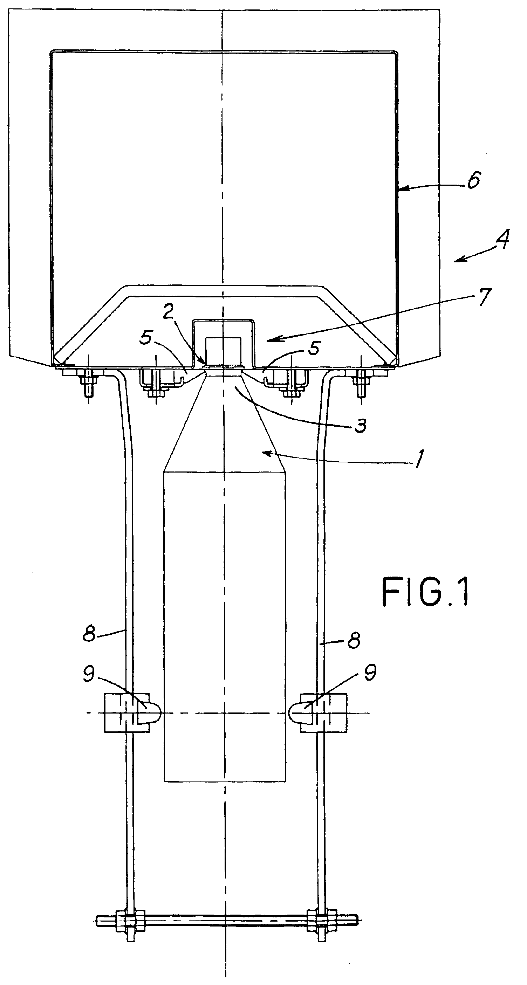

Le dispositif d'aiguillage à plateau tournant fait l'objet de la présente invention s'intègre dans une installation de transfert pneumatique de bouteilles 1 plastiques qui comportent une protubérance 2 au niveau de leur col 3. Une telle installation met en oeuvre des lignes de transfert similaires à celle qui est illustrée schématiquement à la figure 1.

Cette ligne de transfert 4 comporte des supports latéraux 5 dont l'écartement est légèrement inférieur à la plus grande dimension de la bouteille 1 au niveau de la protubérance 2 et supérieur à la dimension extérieure du col 3, de manière à ce que la bouteille 1 puisse être supportée par les deux supports latéraux 5. Cette même ligne de transfert 4 est munie de moyens de transfert par jet d'air, qui sont constitués d'une chambre 6 de mise en pression par un ventilateur centrifuge. La partie inférieure de cette chambre 6 forme un caisson 7, muni de fentes ; ce caisson 7 surplombe les supports latéraux 5 et la partie supérieure des bouteilles 1. L'air qui s'échappe par les fentes du caisson 7 est dirigé sur la partie supérieure des bouteilles 1 créant ainsi par réaction une force motrice aéraulique qui provoque le glissement des bouteilles 1 sur les supports latéraux 5. Sous la chambre 6 sont fixés de manière espacée des montants verticaux supportant des guides latéraux 9. Ainsi lors de leur déplacement dans une ligne de transfert 4, les bouteilles 1 sont maintenues latéralement par les guides 9.

Dans une installation de transfert pneumatique classique, la mise en relation de quatre machines deux à deux se fait obligatoirement par au moins deux dispositifs d'aiguillage en Y tel que celui décrit par le document US 5 246 097. C'est par exemple le cas lorsqu'il s'agit d'évacuer les bouteilles fabriquées par deux machines de soufflage et de les conduire par une machine de soutirage ou un palettiseur.

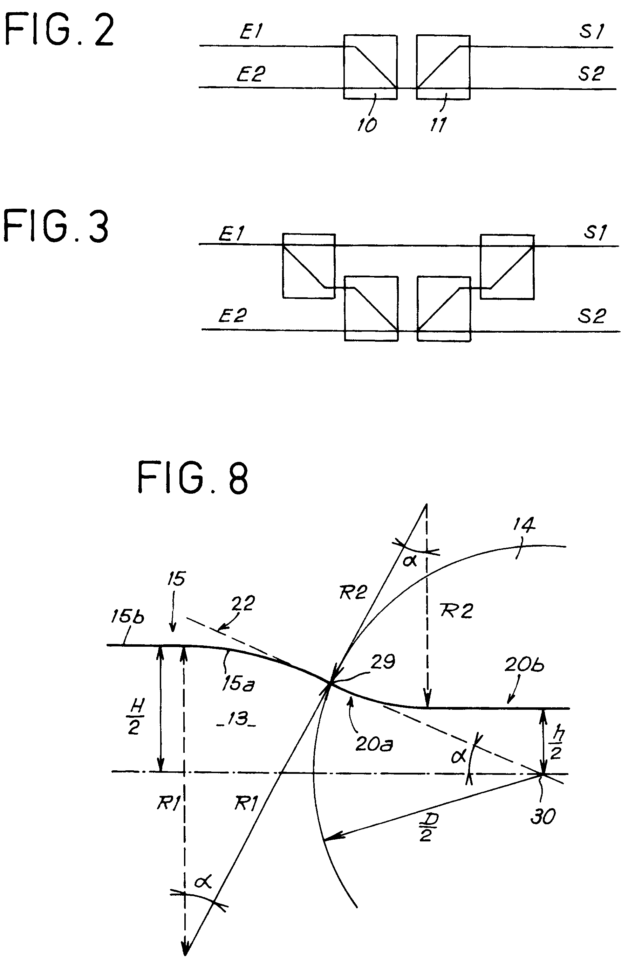

Sur la figure 2 on a représenté schématiquement ces deux dispositifs d'aiguillage en Y avec leurs deux entrées respectivement E1, E2 et leurs deux sorties respectivement S1 et S2.

Le premier dispositif d'aiguillage en Y 10 réalise une fonction de collecte de deux en un tandis que le second dispositif d'aiguillage en Y 11 réalise une fonction de distribution de un en deux. Grâce au système d'arrêt dont est pourvue chacune des entrées E1, E2 et sorties S1, S2 au niveau de ces deux dispositifs 10 ,11, il est possible de faire passer les bouteilles provenant d'une entrée donnée E1 ou E2 vers l'une ou l'autre des sorties S1 ou S2.

Le gros inconvénient de cette série de deux dispositifs d'aiguillage en Y réside dans la concentration du flux de bouteilles en une ligne de transfert raccordant les deux dispositifs d'aiguillage 10 , 11. En effet cette concentration provoque obligatoirement un ralentissement de la cadence de production.

Pour éviter cet inconvénient, on est obligé de mettre quatre dispositifs d'aiguillage en Y en série comme illustrée à la figure 3. Une telle cascade d'aiguillage rend particulièrement complexe et coûteux les lignes de transfert pneumatique actuelles.

Le premier exemple ci-après propose un dispositif d'aiguillage quatre voies permettant de s'intégrer dans les lignes de transfert pneumatique actuelles en remplacement des dispositifs d'aiguillage en Y, tout en assurant un nombre de fonctions de collecte ou distribution plus important.

Un tel dispositif comporte un tablier fixe 13 et un plateau tournant 14 qui est inséré dans la partie médiane du tablier fixe 13.

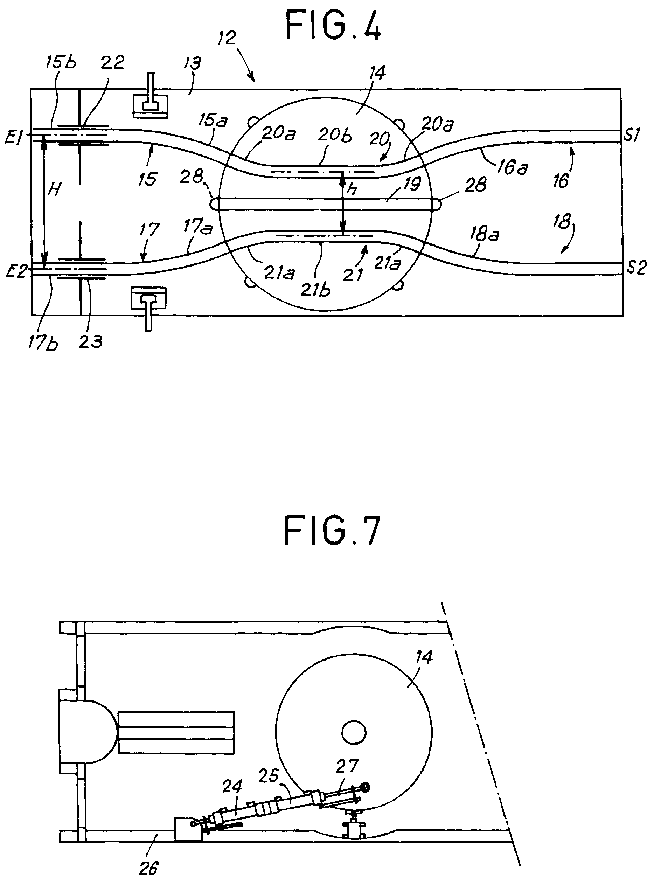

Dans ce tablier fixe et ce plateau tournant sont montés des tronçons de lignes de transfert, comme cela est représenté aux figures 4 à 6. Il est à souligner que chaque tronçon de ligne de transfert qui va être décrit s'accompagne des éléments qui le compose habituellement , tels qu'ils ont été décrits ci-dessus, et illustrés à la figure 1. Sur les figures 4 à 6, la représentation des tronçons correspond uniquement à la fente existant entre les supports latéraux 5.

Le dispositif d'aiguillage à quatre voies 12 s'intègre dans une installation de transfert pneumatique à deux lignes de transfert parallèles d'entr'axe H. Il comporte sur le tablier fixe 13 quatre tronçons de lignes de transfert, à savoir un premier tronçon amont 15 d'entrée et un premier tronçon aval 16 de sortie tous deux raccordés à la première ligne de transfert et un second tronçon amont 17 d'entrée et un second tronçon aval 18 de sortie tous deux raccordés à la seconde ligne de transfert.

Dans les zones de raccordement de ces quatre tronçons aux lignes de transfert correspondantes, ceux-ci sont parallèles avec le même entr'axe H.

Le plateau tournant 14 comporte quant à lui trois tronçons de lignes de transfert, à savoir un tronçon diamétral 19 et deux tronçons extérieurs 20 , 21 qui sont disposés de part et d'autre du tronçon diamétral 19 et symétriquement par rapport à celui-ci.

La figure 4 illustre la première position du plateau tournant 14 dans laquelle les entrées E1, E2 des deux lignes de transfert sont directement liées aux sorties S1, S2 des deux mêmes lignes de transfert grâce aux deux tronçons extérieurs d'aiguillage 20 , 21.

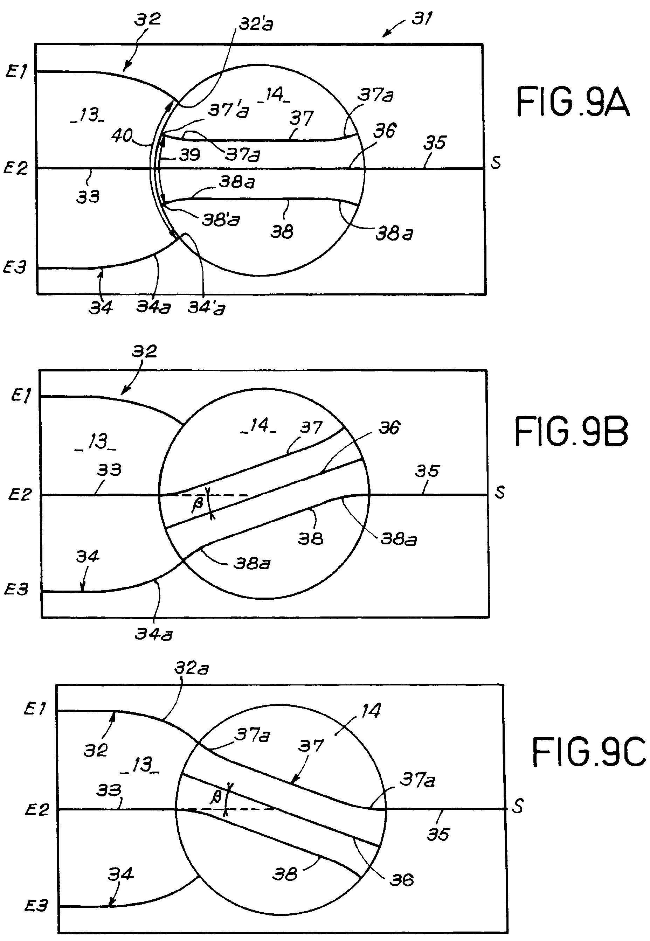

Comme cela apparaît clairement aux figures 4 et 8, le raccordement des tronçons amont 15, 17 du tablier fixe 13 aux tronçons extérieurs 20, 21 du plateau tournant 14 est obtenu par un recourbement des deux extrémités correspondantes de manière à ce que l'on obtienne une sorte de S dont la ligne d'inflexion 22 c'est-à-dire la tangente au point d'inflexion 29 ; qui se trouve à la limite entre le plateau tournant 14 et le tablier fixe 13 a une direction radiale par rapport au plateau tournant 14, passant par l'axe de rotation 30 de celui-ci.

Ainsi chaque tronçon amont et aval sur le tablier fixe a son extrémité correspondante 15a, 16a, 17a, 18a qui est recourbée selon un rayon de courbure R1 vers une direction radiale par rapport au plateau tournant 14. De même les extrémités 20a, 21a des deux tronçons extérieurs d'aiguillage 20, 21 sont recourbés vers une direction radiale au plateau tournant 14, lesdites extrémités 20a, 21a faisant face dans la première position du plateau tournant 14, aux extrémités correspondantes 15a, 16a, 17a, 18a. La courbure des extrémités 20a, 21a des deux tronçons extérieurs d'aiguillage 21 est inverse de celle des extrémités 15a à 18a précitées.

Entre les extrémités recourbées 20a et 21a, les deux tronçons extérieurs 20, 21 comportent une partie rectiligne 20b, 21b présentant un entr'axe h < H.

On comprend que la valeur de l'entr'axe h doit être suffisante pour permettre le passage simultané de bouteilles sur les deux tronçons extérieurs 20, 21 et également la mise en place sur le plateau tournant des guides latéraux 9.

De plus les rayons de courbures R1 et R2 doivent avoir une valeur suffisamment élevée pour éviter tout freinage rédhibitoire des bouteilles lors de leur déplacement par glissement sur les supports latéraux 5, freinage qui ne manquerait pas de se produire en cas de rayon de courbure faible. Dans un exemple précis de réalisation, les rayons de courbure R1 des extrémités des tronçons amont et aval du tablier fixe 13 étaient de l'ordre de 750 mm pour un entr'axe H de 500 mm entre les deux lignes de transfert d'entrée et de sortie. Afin de préserver un entr'axe h suffisant de l'ordre de 310 mm, le rayon de courbure R1 a été choisi de l'ordre de 500 mm. Ce choix de valeur a également été déterminé par la volonté de préserver pour le plateau tournant un encombrement réduit acceptable pour permettre l'intégration du dispositif d'aiguillage quatre voies 12 de l'invention de part et d'autre de deux autres lignes de transfert parallèles. Ainsi le diamètre du plateau tournant 14 a été choisi à environ 1 010 mm, ce qui a entraîné l'existence d'une partie rectiligne 20b, 21b des deux tronçons extérieurs d'aiguillage 20, 21 faisant environ 550 mm. Dans ce cas l'angle de courbure $\alpha$ était de 22,48°.

La première position du plateau tournant 14 illustrée à la figure 4 permet de réaliser une fonction de transfert qui n'existait pas jusqu'alors dans les dispositifs d'aiguillage, fonction E1/S1 + E1/S2 dans laquelle les deux flux de bouteilles parcourant les deux lignes de transfert ne sont pas interrompus ni déviés.

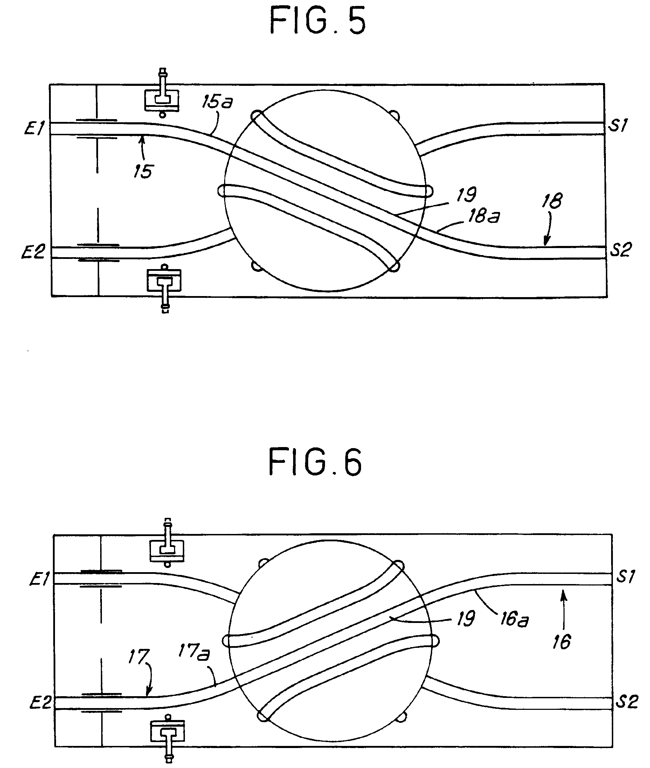

Selon la deuxième position du plateau tournant 14, celui-ci a pivoté par rapport à la première position d'un angle $\alpha$ pris dans le sens des aiguilles d'une montre dans l'illustration qui en est faite à la figure 5. Cet angle $\alpha$ est déterminé en sorte que le tronçon diamétral d'aiguillage 19 vienne se placer en regard des extrémités 15a, 18a, du premier tronçon amont 15 et du second tronçon aval 18. Ainsi l'entrée E1 de la première ligne de transfert est raccordée à la sortie S2 de la seconde ligne de transfert. Comme cela apparaît à l'examen de la figure 8, il s'agit bien de l'angle $\alpha$ de courbure des extrémités recourbées des tronçons amont, aval et extérieurs.

Dans la troisième position du plateau tournant 14, celui-ci est entraîné à pivoter, par rapport à la première position, d'un angle $\alpha$ pris dans le sens inverse des aiguilles d'une montre selon la représentation qui en est faite à la figure 6. Le tronçon diamétral d'aiguillage 19 est, dans cette position, face aux extrémités recourbées respectivement 17a et 16a du second tronçon amont 17 et du premier tronçon aval 16. On obtient donc une mise en relation de l'entrée E2 de la seconde ligne de transfert et la sortie S1 de la première ligne de transfert.

Pour réaliser les fonctions de collecte et de distribution qui sont nécessaires pour la mise en relation de quatre machines dans une installation de ce type, des systèmes d'arrêt 22 , 23 sont montés sur le tablier fixe 13 au droit des parties rectilignes 15b, 17b des deux tronçons amont 15, 17. Ces systèmes d'arrêt permettent de stopper une bouteille 1 lors de son déplacement et par conséquent l'ensemble du flux de bouteilles qui lui fait suite.

Un circuit électronique de commande est relié aux deux systèmes d'arrêt 22,23 et au moyen de pivotement du plateau tournant 14. Ce moyen de pivotement peut consister notamment en deux vérins 24, 25 qui sont montés en série, comme illustrés à la figure 7, avec le corps du premier vérin 24 qui est fixé sur le bâti 26 disposé latéralement par rapport au tablier fixe 13 tandis que l'extrémité libre de la tige 27 du second vérin 25 et fixé sur le dessus du plateau tournant 14. L'actionnement combiné des deux vérins 24, 25 permet de donner au plateau 14 les trois positions pré-réglées précitées. Ce moyen de pivotement peut être complété par des butées réglables permettant de garantir la concordance des tronçons du tablier fixe 13 et du plateau tournant 14 dans chacune des trois positions. De plus le fonctionnement correct du dispositif d'aiguillage à quatre voies 12 peut être contrôlé par un capteur interrupteur mécanique donnant une information sur le positionnement du plateau tournant 14.

Grâce au circuit électronique de commande, il est possible de combiner des séquences de fonctionnement intégrant à la fois l'action des systèmes d'arrêt 22 et 23 et les trois positions de plateaux tournant 14. On peut ainsi obtenir les quatre fonctions de collecte et de distribution, à savoir respectivement E1 + E2/S1 , E1+E2/S2 pour la collecte de deux en un et E1/S1 + S2 , E2/S1 + S2 pour la distribution de un en deux.

Ainsi le dispositif 12 d'aiguillage à quatre voies selon l'invention permet de réaliser à lui seul les fonctions d'aiguillage qui nécessitent habituellement quatre dispositifs d'aiguillage en Y, avec en plus la possibilité de transfert direct E1/S1 et E2/S2 qui n'existe pas dans l'aiguillage actuel.

Dans le cas d'une installation visant à relier un grand nombre de machines entre elles, le dispositif d'aiguillage 12 de l'invention permet une simplification considérable des implantations et une plus grande flexibilité.

De préférence le dispositif 12 est totalement automatisé, s'intégrant dans une installation également automatique. Pour cela on utilise des détecteurs, par exemple photo-électrique ou ultrasonique, localisés sur les tronçons amont et aval du tablier fixe ce qui permet de gérer la transition des flux de bouteilles dans la zone d'aiguillage centrale du dispositif à l'aide des systèmes d'arrêt 22, 23.

Afin de permettre l'extraction des bouteilles qui seraient restées dans l'un ou l'autre des tronçons d'aiguillage 19, 20 ou 21 du plateau tournant 14, le tablier fixe 13 comporte des encoches 28 qui sont situées en regard du plateau tournant plus précisément en regard des extrémités non raccordées de ces tronçons lorsque le plateau tournant 14 prend la deuxième et la troisième positions précitées. Le positionnement de ces encoches 28 est plus clairement illustré aux figures 4 à 6. Ainsi lorsqu'une bouteille est restée dans un tronçon d'aiguillage, il est possible à l'opérateur de venir l'extraire en la déplaçant jusqu'au niveau de l'une des encoches 28, dont la largeur est supérieure à la dimension extérieure de la protubérance 2 du col 3 de la bouteille 1. Cet extraction peut être réalisée en temps masqué, sans interruption du flux de bouteilles empruntant un autre tronçon d'aiguillage.

De préférence chaque tronçon d'aiguillage est équipé de capteurs reliés au circuit électronique de commande en sorte d'obtenir la détection d'une bouteille restant de manière inopportune dans un tronçon d'aiguillage et l'alerte de l'opérateur. Le circuit automatique de commande peut également interdire la rotation du plateau tournant jusqu'à ce que ce défaut soit corrigé.

Dans une première variante de réalisation, illustrée à la figure 9, le dispositif d'aiguillage 31 selon l'invention est un dispositif qui est destiné à remplir une fonction de collecte de trois en un, pour une installation de transfert pneumatique à trois lignes de transfert parallèles dont les flux de bouteilles doivent alimenter une seule ligne de transfert. Il s'agit en l'occurrence sur la figure 9 des trois lignes d'entrée E1, E2, E3 devant alimenter la ligne de sortie S.

Le dispositif d'aiguillage 31 comporte de la même manière un tablier fixe 13 et un plateau tournant 14. La tablier fixe comporte trois tronçons amont 32, 33, 34 prolongeant les trois lignes d'entrée E1, E2 et E3 et un tronçon aval 35 prolongeant la ligne de sortie S. Le plateau tournant 14 comporte comme dans le premier exemple un tronçon diamétral d'aiguillage 36 et deux tronçons extérieurs d'aiguillage 37, 38 disposés de part et d'autre et symétriquement au tronçon diamétral 36. Le deuxième tronçon amont 33 est aligné avec le tronçon aval 35 selon une direction radiale par rapport au plateau tournant 14. Les premier et troisième tronçons amont 32, 34 sont disposés de part et d'autre et symétriquement par rapport au deuxième tronçon 33.

Les extrémités 32a, 34a des premier et troisième tronçons amont 32, 34 sont recourbées radialement par rapport au plateau tournant 14.

Il en est de même pour les extrémités 37a, 38a des deux tronçons extérieurs d'aiguillage 37, 38 du plateau tournant 14.

Dans la première position du plateau tournant 14, qui est illustrée à la figure 9A, le tronçon diamétral d'aiguillage 36 est dans l'alignement du deuxième tronçon amont 33 et du tronçon aval de sortie 35, en sorte que la ligne d'entrée E2 est raccordée à la ligne de sortie S. Les deux lignes extérieures d'aiguillage 37, 38 sont inactives.

Dans la deuxième position qui est illustrée à la figure 9B le plateau tournant a pivoté d'un angle β dans le sens inverse des aiguilles d'une montre ; les deux extrémités recourbées 38a du second tronçon extérieur d'aiguillage 38 se trouvent en concordance avec d'une part l'extrémité recourbée 34a du troisième tronçon amont 34 et d'autre part le tronçon aval 35. Le tronçon diamétral 36 et le premier tronçon extérieur d'aiguillage 37 sont inactifs. Ainsi, dans cette deuxième position, seule la troisième ligne d'entrée E3 est raccordée à la ligne de sortie S.

Dans la troisième position illustrée à la figure 9C, le plateau tournant 14 a, par rapport à la première position, pivoté d'un angle β dans le sens des aiguilles d'une montre. Les extrémités recourbées 37a du premier tronçon extérieur d'aiguillage 37 sont alors en concordance avec d'une part l'extrémité recourbée 32a du premier tronçon amont et d'autre part le tronçon aval 35. Le tronçon diamétral d'aiguillage 36 et le second tronçon extérieur d'aiguillage 38 sont inactifs. Ainsi seule la première ligne d'entrée E1 est raccordée à la ligne de sortie S. Bien sûr, sur les trois tronçons amont 32, 33, 34 sont prévus des systèmes d'arrêt, non représentés, permettant de stopper le flux de bouteilles et d'autoriser le passage d'un seul flux à travers le plateau tournant 14 vers la ligne de sortie S.

Pour obtenir cette concordance, il est nécessaire que l'arc de cercle 39 entre les points extrêmes 37'a, 38'a des deux extrémités recourbées 37a, 38a des deux tronçons extérieurs 37, 38 d'aiguillage soit égal à la moitié de l'arc de cercle 40 entre les points extrêmes 32'a 34'a des deux extrémités recourbées 32a, 34a du premier et du troisième tronçon amont;du point de vue structurel, cela signifie également que l'angle de courbure des extrémités recourbées 37a, 38a des deux tronçons extérieurs d'aiguillage 37, 38 est égal à l'angle de pivotement β tandis que l'angle de courbure des deux extrémités recourbées 32a, 34a des deux tronçons amont 32, 34 est égal à deux fois β.

Dans un mode précis de réalisation de cette première variante d'aiguillage, l'entr'axe entre chacune des deux lignes d'entrée E1, E2 ; E2, E3 était de l'ordre de 500 mm ; l'entr'axe entre le tronçon diamétral et chacun des deux tronçons extérieurs d'aiguillage était compris entre 145 et 155 mm ; le diamètre du plateau tournant 14 était de l'ordre de 1 200 mm. Dans ce cas β était de l'ordre de 19,5°.

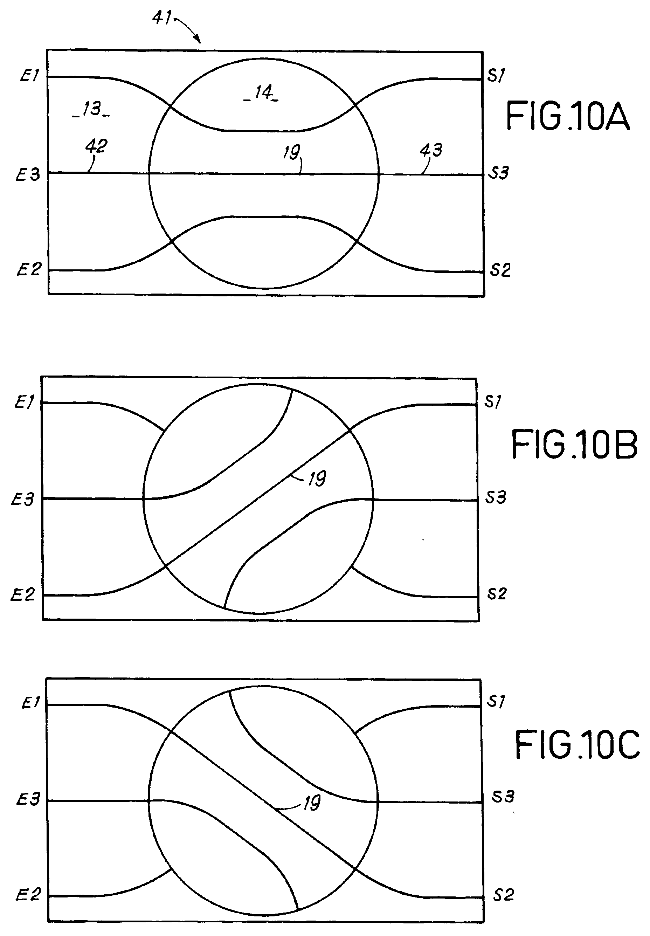

Dans une seconde variante de réalisation, illustrée à la figure 10, le dispositif d'aiguillage 41 est un dispositif six voies, destiné à être implanté dans une installation transfert pneumatique à trois lignes de transfert parallèles. Par rapport au dispositif 41, on a donc trois lignes d'entrée E1, E2, E3 et trois lignes de sortie S1, S2, S3.

Cette seconde variante ne diffère de la première que par la présence sur le tablier fixe 13 d'un troisième tronçon amont 42 et un troisième tronçon aval 43, qui sont rectilignes , alignés l'un avec l'autre, selon une direction radiale par rapport au plateau tournant 14.

Ainsi lorsque le plateau tournant 14 est dans la première position, le troisième tronçon amont 42 est raccordé au troisième tronçon aval 43 grâce au tronçon diamétral d'aiguillage 19. Ainsi dans cette première position, il s'agit d'une fonction de transfert directe selon laquelle les trois lignes d'entrée E1, E2 et E3 sont raccordées aux trois lignes de sortie S1, S2, S3.

Dans les deux autres positions, les raccordements sont réalisés de manière identique à ce qui se passe dans le premier exemple de réalisation, la mise en raccordement se faisant uniquement par le tronçon diamétral d'aiguillage 19.

Dans un exemple précis de réalisation, les paramètres étant identiques à ceux du second exemple, l'angle de pivotement était de l'ordre de 37°.

La présente invention n'est pas limitée au mode de réalisation qui vient d'être décrit à titre d'exemple non exhaustif. En particulier les dimensions préférées qui ont été données ne sont pas limitatives, notamment lorsqu'il s'agit de transférer des récipients ayant un dimensionnement extérieur encore plus important par exemple des bouteilles en matière plastique faisant de trois à cinq litres. Dans ce cas le diamètre du plateau tournant pourra éventuellement être supérieur à l'encombrement normal de deux lignes de transfert parallèles.

## Revendications

1. Dispositif d'aiguillage pour une installation à lignes parallèles de transfert pneumatique de récipients (1) qui comportent une protubérance (2) au niveau du col (3) ; chaque ligne de transfert (4) étant délimitée par deux supports latéraux (5) aptes à supporter les récipients (1) par leur protubérance (2) et étant équipée de moyens de transfert par jet d'air, caractérisé en ce qu'il comprend un tablier fixe (13) et un plateau circulaire tournant (14), en ce que le tablier fixe (13) comprend une pluralité de tronçons de lignes de transfert, à savoir un tronçon amont par ligne d'entrée et un tronçon aval par ligne de sortie, chacun desdits tronçons étant raccordé au plateau tournant selon une direction radiale, et présentant donc, s'il n'a pas lui-même cette direction radiale, une extrémité recourbée radialement par rapport au plateau tournant, en ce que le plateau circulaire tournant comprend trois tronçons de transfert d'aiguillage, à savoir un tronçon diamétral et un tronçon extérieur disposé de part et d'autre du tronçon diamétral, symétriquement à celui-ci, chaque tronçon extérieur étant raccordé au tablier fixe selon une extrémité recourbée radialement par rapport au plateau tournant, et en ce que le plateau tournant est équipé de moyens de pivotement aptes à lui faire adopter des positions prédéterminées, dans lesquelles sont mis en concordance tout ou partie des tronçons amont et aval du tablier fixe (13) grâce à tout ou partie des tronçons d'aiguillage du plateau tournant (14).

2. Dispositif selon la revendication 1 caractérisé en ce que, s'agissant du transfert pneumatique de récipients (1) ayant un diamètre maximal compris entre 50 et 130 mm, le rayon de courbure R1 de l'extrémité recourbée (15a à 18a) de chacun des tronçons amont (15, 17) et aval (16, 18) du tablier fixe (13) est de l'ordre 750 mm.

3. Dispositif selon l'une des revendications 1 ou 2 caractérisé en ce que le rayon de courbure R2 des extrémités recourbées (20a, 21a) des deux tronçons extérieurs d'aiguillage (20, 21) du plateau tournant (14) est inférieur au rayon de courbure R1 des extrémités recourbées (15a à 18a) des tronçons amont (15, 17) et aval (16,18) du tablier fixe (13).

4. Dispositif selon la revendication 3 caractérisé en ce que pour un rayon de courbure R1 de l'ordre de 750 mm, le rayon de courbure R2 est de l'ordre de 500 mm.

5. Dispositif selon l'une des revendications 2 et 4 caractérisé en ce que le plateau tournant a un diamètre qui est inférieur à 1 250 mm.

6. Dispositif selon l'une des revendications 1 à 5 caractérisé en ce que chaque tronçon extérieur d'aiguillage (20, 21) comporte entre ses deux extrémités recourbées (20a, 21a) une partie rectiligne (20b, 21b).

7. Dispositif selon la revendication 1 caractérisé en ce que l'angle ($\alpha$, $\beta$) de courbure des extrémités recourbées des tronçons est au plus de 40°.

8. Dispositif selon la revendication 7 caractérisé en ce que pour des récipients ayant un diamètre maximal compris entre 50 et 130 mm, l'angle ($\alpha$, $\beta$) de courbure est compris entre 18 et 24°.

9. Dispositif d'aiguillage selon la revendication 1 destiné à une installation à au moins deux lignes de transfert parallèles, ayant donc au moins deux lignes d'entrée et au moins deux lignes de sortie, caractérisé en ce que, le tablier fixe (13) comprend au moins quatre tronçons, à savoir un premier (15) et un second (17) tronçon amont pour respectivement la première (E1) et la seconde (E2) ligne d'entrée, et un premier (16) et un second (18) tronçon aval pour respectivement la première (S1) et la seconde (S2) ligne de sortie, chacun des tronçons étant raccordé au plateau tournant (14) par une extrémité recourbée (15a à 18a) radialement, et en ce que le plateau tournant (14) peut adopter trois positions prédéterminées :

a) une première position selon laquelle le premier (15) et le second (17) tronçon amont sont raccordés respectivement au premier (16) et au second (18) tronçon aval des deux lignes de transfert du tablier fixe (13) grâce aux deux tronçons extérieurs d'aiguillage (20, 21) du plateau tournant (14), le tronçon diamétral (19) du plateau tournant étant inactif dans cette première position et étant parallèle et à égale distance de la direction générale des deux lignes de transfert,

b) une deuxième position selon laquelle le premier tronçon amont (15) est raccordé au second tronçon aval (18) grâce au tronçon diamétral d'aiguillage (19),

c) et une troisième position selon laquelle le second tronçon amont (17) est raccordé au premier tronçon aval (16) grâce au tronçon diamétral d'aiguillage (19).

10. Dispositif selon la revendication 9 caractérisé en ce que, s'agissant du transfert pneumatique de récipients (1) dont le diamètre extérieur est compris entre 50 et 130 mm, l'entr'axe (H) entre les deux lignes de transfert parallèles étant de 500 mm, les deux rayons de courbures R1 et R2 sont respectivement de 750 et 500 mm , le diamètre du plateau tournant (14) est de l'ordre de 1 010 mm, la longueur des parties rectilignes (20<u>b</u>, 21<u>b</u>) des tronçons extérieurs (20, 21) d'aiguillage sont de l'ordre de 550 mm avec un entr'axe (h) de l'ordre de 310 mm et l'angle ($\alpha$) de courbure est de l'ordre de 22,5°.

11. Dispositif d'aiguillage selon la revendication 9 destiné à une installation à trois lignes de transfert parallèles, ayant donc trois lignes d'entrée et trois lignes de sortie, caractérisé en ce que, le tablier fixe (13) comprend deux tronçons supplémentaires, à savoir un troisième tronçon amont (42) pour la troisième ligne d'entrée (E3) et un troisième tronçon aval (43) pour la troisième ligne de sortie (S3), ces deux tronçons supplémentaires (42, 43) étant rectilignes et dans l'alignement du tronçon diamétral d'aiguillage (19) dans la première position.

12. Dispositif d'aiguillage selon la revendication 1 destiné à une installation à trois lignes d'entrée et une ligne de sortie, caractérisé en ce que le tronçon amont (33) de la troisième ligne d'entrée (E2) et le tronçon aval (35) de la ligne de sortie (S) sont rectilignes , tandis que les premier (32) et deuxième (34) tronçons amont des première (E1) et deuxième (E3) lignes d'entrée sont raccordés au plateau tournant (14) par une extrémité recourbée (32<u>a</u>, 34<u>a</u>), étant disposés de part et d'autre par rapport au troisième tronçon (33), et en ce que le plateau tournant peut adopter trois positions :

a) une première position selon laquelle seul le troisième tronçon (33) amont est raccordé au tronçon (35) de sortie grâce au tronçon diamétral d'aiguillage,

b) une deuxième position selon laquelle seul le premier tronçon amont (32) est raccordé au tronçon aval (35) de sortie grâce au premier tronçon extérieur d'aiguillage (37),

c) et une troisième position selon laquelle seul le deuxième tronçon (34) amont est raccordé au tronçon de sortie (35) grâce au second tronçon extérieur d'aiguillage (38).

13. Dispositif selon la revendication 1 caractérisé en ce que le tablier fixe (13) comporte au moins une encoche (2) d'extraction des récipients à proximité et en regard du plateau tournant (14) au niveau d'un emplacement du tronçon diamétral d'aiguillage (19) lorsque le plateau tournant (14) est dans la première position.

14. Dispositif selon la revendication 13 caractérisé en ce que le tablier fixe (13) comporte trois ou six encoches (28) en concordance avec les trois positions possibles adoptées par les trois tronçons (19, 20, 21) d'aiguillage.

15. Dispositif selon la revendication 14 caractérisé en ce que les trois tronçons d'aiguillage (19, 20, 21) sont équipés de détecteurs de présence de récipients (1), lesdits détecteurs étant aptes à interdire, la rotation du plateau tournant (14) jusqu'à extraction manuelle d'un récipient détecté.

16. Dispositif selon l'une des revendications 1, 9 ou 11 caractérisé en ce qu'il comporte sur les tronçons amont (15, 17) des lignes d'entrée du tablier fixe (13) des moyens d'arrêt (22, 23) des récipients (1) ainsi que des moyens de commande automatiques desdits moyens d'arrêt et des moyens de pivotement du plateau tournant ; en ce que les moyens de commande automatiques sont programmés en sorte d'obtenir automatiquement toutes les fonctions possibles de transfert/collecte/distribution des récipients (1) sur les lignes de transfert d'entrée et de sortie.

## Claims

1. Switching point device for an installation with parallel lines for the pneumatic transfer of containers (1) which include a protuberance (2) at their neck (3); each transfer line (4) being delimited by two lateral supports (5) which are capable of supporting the containers (1) by their protuberance (2) and are equipped with air-jet transfer means, characterized in that it comprises a fixed platform (13) and a circular turntable (14), in that the fixed platform (13) comprises a plurality of transfer-line segments, mainly one upstream segment per entry line and one downstream segment per exit line, each of the said segments being connected to the turntable in a radial direction, and therefore having, if it does not itself have this radial direction, an end which is curved radially with respect to the turntable, in that the circular turntable comprises three switching point transfer segments, namely a diametral segment and an external segment arranged on either side of the diametral segment, symmetrically therewith, each external segment being connected to the fixed platform via one end which is curved radially with respect to the turntable, and in that the turntable is equipped with pivoting means capable of making it adopt predetermined positions, in which some or all of the upstream and downstream segments of the fixed platform (13) are brought into correspondence by virtue of some or all of the switching point segments of the turntable (14).

2. Device according to Claim 1, characterized in that, in the case of pneumatic transfer of containers (1) having a maximum diameter of between 50 and 130 mm, the radius of curvature R1 of the curved end (15a to 18a) of each of the upstream (15, 17) and downstream (16, 18) segments of the fixed platform (13) is of the order of 750 mm.

3. Device according to one of Claims 1 or 2, characterized in that the radius of curvature R2 of the curved ends (20a, 21a) of the two external switching point segments (20, 21) of the turntable (14) is less than the radius of curvature R1 of the curved ends (15a to 18a) of the upstream (15, 17) and downstream (16, 18) segments of the fixed platform (13).

4. Device according to Claim 3, characterized in that, for a radius of curvature R1 of the order of 750 mm, the radius of curvature R2 is of the order of 500 mm.

5. Device according to one of Claims 2 and 4, characterized in that the turntable has a diameter which is less than 1250 mm.

6. Device according to one of Claims 1 to 5, characterized in that each external switching point segment (20, 21) includes a straight part (20b, 21b) between its two curved ends (20a, 21a).

7. Device according to Claim 1, characterized in that the angle ($\alpha$, $\beta$) of curvature of the curved ends of the segments is more than 40°.

8. Device according to Claim 7 characterized in that, for containers having a maximum diameter of between 50 and 130 mm, the angle ($\alpha$, $\beta$) of curvature is between 18 and 24°.

9. Switching point device according to claim 1, intended for an installation with at least two parallel transfer lines, therefore having at least two entry lines and at least two exit lines, characterized in that the fixed platform (13) comprises at least four segments, namely a first (15) and a second (17) upstream segment, respectively for the first (E1) and the second (E2) entry line, and a first (16) and a second (18) downstream segment, respectively for the first (S1) and the second (S2) exit line, each of the segments being connected to the turntable (14) via a radially curved end (15a to 18a), and in that the turntable (14) can adopt three predetermined positions:

    a) a first position, in which the first (15) and the second (17) upstream segments are connected respectively to the first (16) and the second (18) downstream segments of the two transfer lines of the fixed platform (13) by virtue of the two external switching point segments (20, 21) of the turntable (14), the diametral segment (19) of the turntable being inactive in this first position and being parallel to and equidistant from the general direction of the two transfer lines,
    b) a second position in which the first upstream segment (15) is connected to the second downstream segment (18) by virtue of the diametral switching point segment (19),
    c) and a third position, in which the second upstream segment (17) is connected to the first downstream segment (16) by virtue of the diametral switching point segment (19).

10. Device according to Claim 9, characterized in that, in the case of the pneumatic transfer of containers (1) whose external diameter is between 50 and 130 mm, the interaxial distance (H) between the two parallel transfer lines being 500 mm, the two radii of curvature R1 and R2 are respectively 750 and 500 mm, the diameter of the turntable (14) is of the order of 1010 mm, the length of the straight parts (20b, 21b) of the external switching point segments (20, 21) are of the order of 550 mm with an interaxial distance (h) of the order of 310 mm and the angle ($\alpha$) of curvature is of the order of 22.5°.

11. Switching point device according to Claim 1, intended for an installation with three parallel transfer lines, therefore having three entry lines and three exit lines, characterized in that the fixed platform (13) comprises two additional segments, namely a third upstream segment (42) for the third entry line (E3) and a third downstream segment (43) for the third exit line (S3), these two additional segments (42, 43) being straight and in alignment with the diametral switching point segment (19) in the first position.

12. Switching point device according to Claim 1, intended for an installation with three entry lines and one exit line, characterized in that the upstream segment (33) of the third entry line (E2) and the downstream segment (35) of the exit line (S) are straight, whereas the first (32) and second (34) upstream segments of the first (E1) and second (E3) entry lines are connected to the turntable (14) via a curved end (32a, 34a) and are arranged on either side with respect to the third segment (33), and in that the turntable can adopt three positions:

a) a first position, in which only the third upstream segment (33) is connected to the exit segment (35) by virtue of the diametral switching point segment,
b) a second position, in which only the first upstream segment (32) is connected to the downstream exit section (35) by virtue of the first external switching point segment (37),
c) and a third position, in which only the second upstream segment (34) is connected to the exit segment (35) by virtue of the second external switching point segment (38).

13. Device according to Claim 1, characterized in that the fixed platform (13) includes at least one notch (2) for extraction of the containers, in proximity to and facing the turntable (14) at a location of the diametral switching point segment (19) when the turntable (14) is in the first position.

14. Device according to Claim 13, characterized in that the fixed platform (13) includes three or six notches (28) in correspondence with the three possible positions adopted by the three switching point segments (19, 20, 21).

15. Device according to Claim 14, characterized in that the three switching point segments (19, 20, 21) are equipped with container (1) proximity detectors, the said detectors being capable of disabling rotation of the turntable (14) until manual extraction of a detected container.

16. Device according to one of Claims 1, 9 or 11, characterized in that it includes, on the upstream segments (15, 17) of the entry lines of the fixed platform (13), stop means (22, 23) for the containers (1), as well as means for automatically controlling the said stop means and the pivoting means of the turntable; in that the automatic control means are programmed so as to automatically obtain all the possible functions of transfer/collection/distribution of the containers (1) on the entry and exit transfer lines.

**Patentansprüche**

1. Weichenvorrichtung für eine Einrichtung mit parallelen, pneumatischen Förderstraßen für Behälter (1), die eine Ausstülpung (2) in Höhe des Halses (3) aufweisen, wobei jede Förderstraße (4) durch zwei seitliche Abstützungen (5) begrenzt ist, die dazu eingerichtet sind, die Behälter (1) an ihrer Ausstülpung (2) abzustützen und die mit einer Luftstrahl-Fördereinrichtung versehen sind, dadurch **gekennzeichnet**, daß sie eine feste Platte (13) und einen Drehtisch (14) aufweist, daß die feste Platte (13) eine Anzahl von Förderstraßen-Endstücken aufweist, und zwar ein vorgeschaltetes Eingangsstraßen-Endstück und ein nachgeschaltetes Ausgangsstraßen-Endstück, wobei jedes der genannten Endstücke längs einer radialen Richtung mit dem Drehtisch verbunden ist, und demnach, wenn es nicht seinerseits diese radiale Richtung hat, ein in bezug auf den Drehtisch radial gekrümmtes Ende aufweist, daß der kreisförmige Drehtisch drei Weichen-Förderstücke aufweist, und zwar ein diametrales Stück und ein Außenstück, das beiderseits des diametrlen Stücks zu diesem symmetrisch angeordnet ist, wobei jedes Außenstück mit der festen Platte längs eines radial in bezug auf den Drehtisch gekrümmten Endes verbunden ist, und daß der Drehtisch mit einer Schwenkeinrichtung ausgestattet ist, die dazu eingerichtet ist, ihn zu veranlassen, vorbestimmte Lagen einzunehmen, in denen alle oder ein Teil der vorgeschalteten und nachgeschalteten Endstücke der festen Platte (13) mittels aller oder eines Teils der Weichenstükke des Drehtischs (14) verbunden sind.

2. Vorrichtung nach Anspruch 1, dadurch **gekennzeichnet**, daß, wenn es sich um die pneumatische Förderung von Behältern (1) handelt, die einen maximalen Durchmesser aufweisen, der zwischen 50 und 130 mm liegt, der Krümmungsradius R1 des gekrümmten Endes (15a bis 18a) eines jeden der vorgeschalteten (15, 17) und nachgeschalteten (16, 18) Endstücke der festen Platte (13) in der Größenordnung von 750 mm liegt.

3. Vorrichtung nach einem der Ansprüche 1 oder 2, dadurch **gekennzeichnet**, daß Krümmungsradius R2 der gekrümmten Enden (20a, 21a) der beiden äußeren Weichenstücke (20, 21) des Drehtisches (14) kleiner ist als der Krümmungsradius R1 der gekrümmten Enden (15a bis 18a) der vorgeschalteten (15, 17) und nachgeschalteten (16, 18) Endstücke der festen Platte (13).

4. Vorrichtung nach Anspruch 3, dadurch **gekennzeichnet**, daß für einen Krümmungsradius R1 in der Größenordnung von 750 mm der Krümmungsradius R2 in der Größenordnung von 500 mm liegt.

5. Vorrichtung nach einem der Ansprüche 2 und 4, dadurch **gekennzeichnet**, daß der Drehtisch einen Durchmesser aufweist, der kleiner ist als 1250 mm.

6. Vorrichtung nach einem der Ansprüche 1 bis 5, dadurch **gekennzeichnet**, daß jedes äußere Weichenstück (20, 21) zwischen seinen beiden gekrümmten Enden (20a, 21a) einen geradlinigen Teil (20b, 21b) aufweist.

7. Vorrichtung nach Anspruch 1, dadurch **gekennzeichnet**, daß der Winkel (α, β) der Krümmung der gekrümmten Endstücke höchstens 40° beträgt.

8. Vorrichtung nach Anspruch 7, dadurch **gekennzeichnet**, daß für Behälter, die einen maximalen Durchmesser aufweisen, der zwischen 50 und 130 mm liegt, der Winkel (α, β) der Krümmung zwischen 18 und 24° liegt.

9. Weichenvorrichtung nach Anspruch 1, bestimmt für eine Einrichtung mit mindestens zwei parallelen Förderstraßen, die somit mindestens zwei Eingangsstraßen und mindestens zwei Ausgangsstraßen aufweist, dadurch **gekennzeichnet**, daß die feste Platte (13) mindestens vier Endstücke aufweist, und zwar ein erstes (15) und ein zweites (17) vorgeschaltetes Endstück für die erste (E1) bzw. die zweite (E2) Eingangsstraße, und ein erstes (16) und ein zweites (18) nachgeschaltetes Endstück für die erste (S1) bzw. die zweite (S2) Ausgangsstraße, wobei jedes der Endstücke mit dem Drehtisch (14) durch ein radial gekrümmtes Ende (15a bis 18a) verbunden ist, und daß der Drehtisch (14) drei vorbestimmte Lagen einnehmen kann:

     a) eine erste Lage, in der das erste (15) und das zweite (17) vorgeschaltete Endstück mit dem ersten (16) bzw. dem zweiten (18) nachgeschalteten Endstück der beiden Förderstraßen des festen Tisches (13) durch die beiden äußeren Weichenstücke (20, 21) des Drehtischs (14) verbunden sind, wobei das diametrale Stück (19) des Drehtischs in dieser ersten Lage nicht aktiv ist und parallel zur allgemeinen Richtung der beiden Förderstraßen und mit gleichem Abstand angeordnet ist,
     b) eine zweite Lage, in der das erste, vorgeschaltete Endstück (15) mit dem zweiten, nachgeschalteten Endstück (18) durch das diametrale Weichenstück (19) verbunden ist, und
     c) eine dritte Lage, in welcher das zweite, vorgeschaltete Endstück (17) mit dem ersten, nachgeschalteten Endstück (16) durch das diametrale Weichenstück (19) verbunden ist.

10. Vorrichtung nach Anspruch 9, dadurch **gekennzeichnet**, daß dann, wenn es sich um die pneumatische Beförderung von Behältern (1) handelt, deren äußerer Durchmesser zwischen 50 und 130 mm liegt, der Achsabstand (H) zwischen den beiden parallelen Förderstraßen 500 mm beträgt, die beiden Krümmungsradien R1 und R2 750 bis 500 mm betragen, der Durchmesser des Drehtisches (14) in der Größenordnung von 1010 mm liegt, die Länge der geradlinigen Teile (20b, 21b) der äußeren Weichenstücke (20, 21) in der Größenordnung von 550 mm liegt, mit einem Achsabstand (h) in der Größenordnung von 310 mm, und daß der Krümmungswinkel (α) in der Größenordnung von 22,5° liegt.

11. Weichenvorrichtung nach Anspruch 1, die für eine Einrichtung mit drei parallelen Förderstraßen bestimmt ist und somit drei Eingangsstraßen und drei Ausgangsstraßen aufweist, dadurch **gekennzeichnet**, daß die feste Platte (13) zwei ergänzende Endstücke aufweist, und zwar ein drittes, vorgeschaltetes Endstück (42) für die dritte Eingangsstraße (E3) und ein drittes, nachgeschaltetes Endstück (43) für die dritte Ausgangsstraße (S3), wobei diese beiden ergänzenden Endstücke (42, 43) geradlinig sind und sich in Ausrichtung auf das diametrale Weichenstück (19) in der ersten Lage befinden.

12. Weichenvorrichtung nach Anspruch 1, bestimmt für eine Einrichtung mit drei Eingangsstraßen und einer Ausgangsstraße, dadurch **gekennzeichnet**, daß das vorgeschaltete Endstück (33) der dritten Eingangsstraße (E2) und das nachgeschaltete Endstück (35) der Ausgangsstraße (S) geradlinig sind, während das erste (32) und zweite (34) vorgeschaltete Endstück der ersten (E1) und zweiten (E3) Eingangsstraße mit dem Drehtisch (14) durch ein gekrümmtes Ende (32a, 34a) verbunden ist, daß sie beiderseits des dritten Endstücks (33) angeordnet sind, und daß der Drehtisch drei Lagen einnehmen kann:

     a) eine erste Lage, in der das dritte, vorgeschaltete Endstück (33) mit dem Endstück (35) des Ausgangs durch das diametrale Weichenstück verbunden ist,
     b) eine zweite Lage, in der alleine das erste, vorgeschaltete Endstück (32) mit dem nachgeschalteten Endstück (35) des Ausgangs durch das erste äußere Weichenstück (37) verbunden ist, und
     c) eine dritte Lage, in der alleine das zweite, vorgeschaltete Endstück (34) mit dem Ausgangsstück (35) durch das zweite äußere Weichenstück (38) verbunden ist.

13. Vorrichtung nach Anspruch 1, dadurch **gekennzeichnet**, daß die feste Platte (13) mindestens eine Aussparung (2) zur Entnahme von Behältern in der Nähe des Drehtisches (14) und diesem gegenüberliegend auf der Höhe einer Anordnungsstelle des diametralen Weichenstücks (19) aufweist, wenn sich der Drehtisch (14) in der ersten Lage befindet.

14. Vorrichtung nach Anspruch 13, dadurch **gekennzeichnet**, daß die feste Platte (13) sechs Aussparungen (28) in Übereinstimmung mit den drei möglichen Lagen aufweist, die von den drei Weichenstücken (19, 20, 21) eingenommen werden.

**15.** Vorrichtung nach Anspruch 14, dadurch **gekennzeichnet**, daß die drei Weichenstücke (19, 20, 21) mit Einrichtungen zum Erfassen der Anwesenheit von Behältern (1) ausgestattet sind, wobei die genannten Einrichtungen dazu eingerichtet sind, die Drehung des Drehtisches (14) bis zur Entnahme eines erfaßten Meßfühlers von Hand zu unterbinden.

**16.** Vorrichtung nach einem der Ansprüche 1, 9 oder 11, dadurch **gekennzeichnet**, daß sie auf den vorgeschalteten Endstücken (15, 17) der Eingangsstraßen der festen Platte (13) Sperreinrichtungen (22, 23) für Behälter (1) sowie automatische Steuereinrichtungen für die genannten Sperreinrichtungen und Einrichtungen zur Schwenkbewegung des Drehtisches aufweist; und daß die automatische Steuereinrichtung derart progrmamiert ist, daß automatisch alle möglichen Funktionen von Transport/Sammeln/Verteilen von Behältern (1) auf den Eingangs- und Ausgangs-Förderstraßen erhalten werden.

FIG.1

FIG. 2

FIG. 3

FIG. 8

# FIG.4

# FIG.7

# FIG. 5

# FIG. 6

FIG.9A

FIG.9B

FIG.9C

FIG.10A

FIG.10B

FIG.10C